# EUROPEAN PATENT APPLICATION

(11) **EP 3 786 373 A1**
(43) Date of publication of application: **03.03.2021**
(21) Application number: 19793114.0
(22) Date of filing: 18.04.2019
(51) Int. Cl.: E02F 9/20, B60K 11/04, E02F 9/24

(54) **ELECTRIC WORK MACHINE**

(30) Priority: 24.04.2018 JP 2018083139
(71) Applicant: Yanmar Power Technology Co., Ltd., Osaka-shi Osaka 530-8311 (JP)
(72) Inventor: KANEDA,Kensuke, Chikugo-shi, Fukuoka 833-0055 (JP); TERASHIMA,Jun, Chikugo-shi, Fukuoka 833-0055 (JP)
(74) Representative: Poindron, Cyrille
(86) International application number: PCT/JP2019/016571
(87) International publication number: WO 2019/208370

(57) **Abstract**

An excavator 1 comprising: a battery 62; an electric motor 7 having the battery 62 as the drive power source therefor; a hydraulic actuator having a hydraulic pump 113 driven by the electric motor 7 as the oil pressure source therefor; a cut-off lever 415 that limits operation of the hydraulic actuator by cutting off pilot pressure that operates the hydraulic actuator; an electric cooling pump 651 that circulates cooling water through a cooling water path for cooling electrical equipment including the battery 62 and the electric motor 7; an electric cooling fan 652 that blows cooling air on to a radiator provided on the cooling water path; and a system controller 67 that, if the cut-off lever 415 is rotated upwards and a command to limit the hydraulic actuator is received, stops the electric motor 7, the cooling pump 651, and the cooling fan 652.

## Description

### TECHNICAL FIELD

The present invention relates to an electric work machine.

### BACKGROUND ART

In Patent Literature 1 below, a construction machine capable of stopping an electric actuator when locking operation of a lock lever is performed during operation of the electric actuator is disclosed. In Patent Literature 2 below, an electric hydraulic work machine including a cooling system that cools an inverter device for controlling an electric motor is disclosed.

### CITATION LIST

### Patent Literature

Patent Literature 1: Japanese Unexamined Patent Application Publication No. 2013-253409
Patent Literature 2: Japanese Unexamined Patent Application Publication No. 2010-121327

### DISCLOSURE OF INVENTION

### PROBLEMS TO BE SOLVED BY THE INVENTION

In Patent Literature 1 and 2, the electric actuator and the electric motor are stopped with the locking operation of the lock lever as a trigger. However, control of devices, each of which consumes electric power, other than those, is not described. In the electric work machine that is driven by a battery system having the limited electric power as a drive source, it is desired to suppress electric power consumption as much as possible.

The present invention has been made in view of the above problem and therefore has a purpose of providing an electric work machine that includes a battery as a drive power source and can suppress electric power consumption.

### MEANS FOR SOLVING THE PROBLEMS

An electric work machine according to the present invention includes:
a battery;
an electric motor using the battery as a driving power source;
a hydraulic actuator having, as a hydraulic pressure source, a hydraulic pump that is driven by the electric motor;
a cut-off lever for restricting an operation of the hydraulic actuator by blocking a pilot pressure used to operate the hydraulic actuator;
an electric cooling pump that circulates cooling water through a cooling water path for cooling electrical equipment including the battery and the electric motor;
an electric cooling fan that blows cooling air to a radiator provided on the cooling water path; and
a controller that stops the electric motor, the cooling pump, and the cooling fan when the cut-off lever is rotated upward and the controller receives a command of restricting the operation of the hydraulic actuator.

According to the present invention, with locking operation of the cut-off lever, the operation of the hydraulic actuator is restricted by blocking the pilot pressure, and the electric motor is stopped. In this way, it is possible to prevent heat generation of the electrical equipment including the battery and the electric motor. As a result, it is possible to stop the cooling pump and the cooling fan for cooling the electrical equipment and thus to suppress electric power consumption of the battery.

In the present invention, the controller may stop the cooling pump and the cooling fan after the controller receives the command of restricting the operation of the hydraulic actuator and a cooling water temperature in the cooling water path becomes equal to or lower than a threshold value.

In the case where a temperature of the electrical equipment remains high even after the electric motor is stopped, the immediate stop of the cooling pump and the cooling fan possibly damages the electrical equipment. Thus, in the case where the cooling pump and the cooling fan are stopped after the cooling water temperature in the cooling water path becomes equal to or lower than the specified threshold value, the damage to the electrical equipment can be prevented.

### BRIEF DESCRIPTION OF DRAWINGS

FIG. 1 is a side view illustrating an electric work machine according to this embodiment.
FIG. 2 is a side view in which a portion of the electric work machine around a cut-off lever is enlarged.
FIG. 3 is a view illustrating a hydraulic circuit of the electric work machine.
FIG. 4 is a block diagram of a power supply system mounted on the electric work machine.
FIG. 5A is a block diagram of the power supply system implementing a commercial power supply mode.
FIG. 5B is a block diagram of the power supply system implementing a two-way mode.
FIG. 5C is a block diagram of the power supply system implementing a battery mode.
FIG. 5D is a block diagram of the power supply system implementing a charging mode.
FIG. 6 is a flowchart illustrating a procedure of switching control of a power supply mode.

### DESCRIPTION OF EMBODIMENTS

A description will hereinafter be made on embodiments of the present invention with reference to the drawings.

### [Configuration of Electric Work Machine]

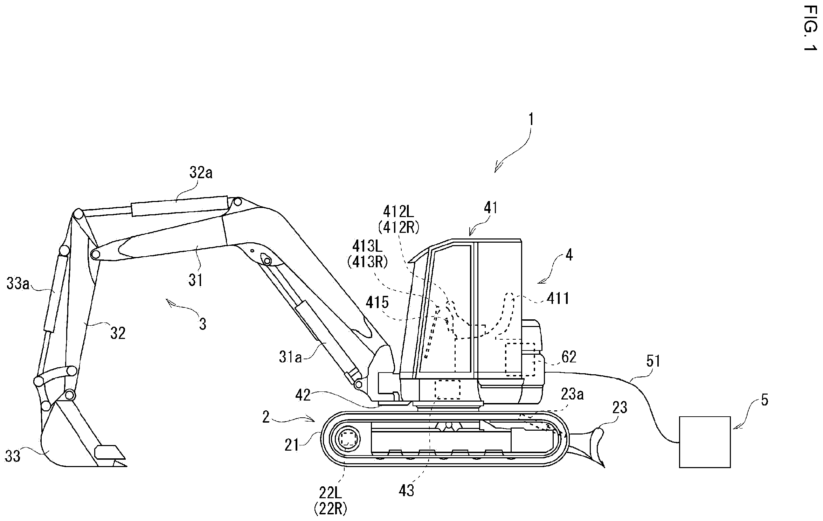

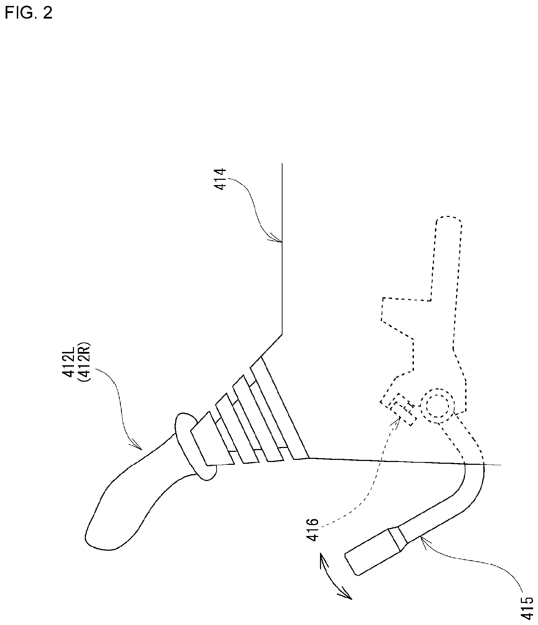

First, a description will be made on a schematic structure of an excavator 1 as an example of the electric work machine with reference to FIG. 1 and FIG. 2. However, the example of the electric work machine is not limited to the excavator 1, and may be another vehicle such as a wheel loader. The excavator 1 includes a lower travel body 2, a work unit 3, and an upper turning body 4.

The lower travel body 2 includes a left and right pair of crawlers 21, 21 and a left and right pair of travel motors 22L, 22R. The left and right travel motors 22L, 22R as hydraulic motors drive the left and right crawlers 21, 21, respectively. In this way, the excavator 1 can travel forward and backward. In addition, the lower travel body 2 is provided with a blade 23 and a blade cylinder 23a that is a hydraulic cylinder for rotating the blade 23 in a vertical direction.

The work unit 3 includes a boom 31, an arm 32, and a bucket 33 and independently drives these components to enable excavation work of gravel or the like. The boom 31, the arm 32, and the bucket 33 each correspond to a work section, and the excavator 1 has a plurality of the work sections.

The boom 31 has a base end portion that is supported by a front portion of the upper turning body 4, and is rotated by a boom cylinder 31a movable in a freely extendable/contractable manner. The arm 32 has a base end portion that is supported by a tip portion of the boom 31, and is rotated by an arm cylinder 32a movable in a freely extendable/contractable manner. The bucket 33 has a base end portion that is supported by a tip portion of the arm 32, and is rotated by a bucket cylinder 33a movable in a freely extendable/contractable manner. Each of the boom cylinder 31a, the arm cylinder 32a, and the bucket cylinder 33a is constructed of a hydraulic cylinder.

The upper turning body 4 is configured to be turnable with respect to the lower travel body 2 via a turning bearing (not illustrated). In the upper turning body 4, an operation section 41, a turn table 42, a turning motor 43, a battery 62, and the like are arranged. With drive power of the turning motor 43 as a hydraulic motor, the upper turning body 4 turns via the turning bearing (not illustrated). In addition, plural hydraulic pumps (not illustrated in FIG. 1) that are driven by an electric motor are disposed in the upper turning body 4. These hydraulic pumps supply hydraulic oil to the hydraulic motors (the travel motors 22L, 22R and the turning motor 43) and the hydraulic cylinders (the blade cylinder 23a, the boom cylinder 31a, the arm cylinder 32a, and the bucket cylinder 33a). The hydraulic motors and the hydraulic cylinders will collectively be referred to as hydraulic actuators.

An operator seat 411 is arranged in the operation section 41. A left and right pair of work operation levers 412L, 412R is arranged on left and right sides of the operator seat 411, and a pair of travel levers 413L, 413R is arranged in front of the operator seat 411. When seated on the operator seat 411 and operating the work operation levers 412L, 412R, the travel levers 413L, 413R, or the like, an operator can control each of the hydraulic actuators, which allows travel, turning, work, or the like.

The work operation levers 412L, 412R are integrally attached to a lever stand 414. From this lever stand 414, a cut-off lever 415 for turning on/off an operation of the work unit 3 using the work operation levers 412L, 412R extends forward. The cut-off lever 415 is configured to be vertically rotatable, and is configured to be brought into a state of allowing actuation of the work unit 3 with operations of the work operation levers 412L, 412R when being rotated downward and to be brought into a locked state where the work unit 3 is not actuated even with the operations of the work operation levers 412L, 412R when being rotated upward. In the lever stand 414, a cut-off switch 416 is provided to detect a rotation position of the cut-off lever 415. The cut-off switch 416 is configured to be turned on when the cut-off lever 415 is rotated downward and to be turned off when the cut-off lever 415 is rotated upward.

The upper turning body 4 is provided with a power supply port, which is not illustrated. When a power supply cable 51 for a commercial power supply 5 is connected to this power supply port, the commercial power supply 5 can be connected to a power supply system 6, which will be described below.

The hydraulic pump that supplies the hydraulic oil to the hydraulic actuator is configured to be actuated by the electric motor that is driven by electric power, and the commercial power supply 5 and the battery 62 supply the electric power to the electric motor.

### [Configuration of Hydraulic Circuit]

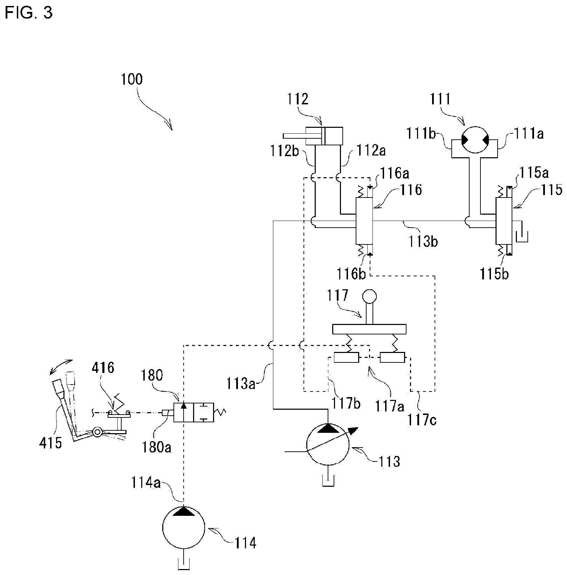

FIG. 3 illustrates a hydraulic circuit 100 that is mounted on the excavator 1. The hydraulic circuit 100 includes a first actuator 111, a second actuator 112, a hydraulic pump 113, a pilot pump 114, a first direction switching valve 115, a second direction switching valve 116, and an operation device 117.

The first actuator 111 is a hydraulic motor that is driven by the hydraulic oil supplied from the hydraulic pump 113. Examples of the first actuator 111 are the travel motors 22L, 22R. The second actuator 112 is a hydraulic cylinder that is driven by the hydraulic oil supplied from the hydraulic pump 113. An example of the second actuator 112 is the boom cylinder 31a.

The hydraulic pump 113 is driven by the electric motor, which is not illustrated, to discharge the hydraulic oil. The hydraulic oil discharged from the hydraulic pump 113 is supplied to the first direction switching valve 115 and the second direction switching valve 116 via an oil passage 113a and an oil passage 113b. In FIG. 3, the oil passages for the hydraulic oil supplied from the hydraulic pump 113 to the first actuator 111 and the second actuator 112 are indicated by solid lines.

The first direction switching valve 115 is a direction switching valve of a pilot type capable of switching a direction of the hydraulic oil supplied to the first actuator 111 and adjusting a flow rate thereof. The second direction switching valve 116 is a direction switching valve of the pilot type capable of switching a direction of the hydraulic oil supplied to the second actuator 112 and adjusting a flow rate thereof.

The pilot pump 114 discharges pilot hydraulic oil as a command input to the first direction switching valve 115 and the second direction switching valve 116. In FIG. 3, oil passages for the pilot hydraulic oil supplied from the pilot pump 114 to the second direction switching valve 116 are indicated by broken lines (here, oil passages for the pilot hydraulic oil supplied from the pilot pump 114 to the first direction switching valve 115 are not illustrated). The pilot pump 114 generates a pilot pressure to be applied to the first direction switching valve 115 and the second direction switching valve 116. The pilot pump 114 is driven by the electric motor, which is not illustrated, and discharges the hydraulic oil so as to generate the pilot pressure in an oil passage 114a.

The first direction switching valve 115 can be switched to any of plural positions by sliding a spool. In the case where the pilot pressure is applied to none of a pilot port 115a and a pilot port 115b of the first direction switching valve 115, an urging force of a spring keeps the first direction switching valve 115 at a neutral position. In the case where the first direction switching valve 115 is at the neutral position, the hydraulic oil is not supplied from the oil passage 113b to the first actuator 111.

On the other hand, in the case where the pilot pressure is applied to the pilot port 115a or the pilot port 115b of the first direction switching valve 115, the first direction switching valve 115 is switched from the neutral position to another position, and the hydraulic oil is supplied to the first actuator 111 via an oil passage 111a or an oil passage 111b. With the hydraulic oil that is supplied via the oil passage 111a or the oil passage 111b, the first actuator 111 is rotationally driven in a positive direction or a reverse direction.

The second direction switching valve 116 can be switched to any of plural positions by sliding a spool. In the case where the pilot pressure is applied to none of a pilot port 116a and a pilot port 116b of the second direction switching valve 116, an urging force of a spring keeps the second direction switching valve 116 at a neutral position. In the case where the second direction switching valve 116 is at the neutral position, the hydraulic oil is not supplied from the oil passage 113a to the second actuator 112.

On the other hand, in the case where the pilot pressure is applied to the pilot port 116a or the pilot port 116b of the second direction switching valve 116, the second direction switching valve 116 is switched from the neutral position to another position, and the hydraulic oil is supplied to the second actuator 112 via an oil passage 112a or an oil passage 112b. With the hydraulic oil that is supplied via the oil passage 112a or the oil passage 112b, the second actuator 112 is contracted.

The operation device 117 has a remote control valve 117a for switching a direction and the pressure of the pilot hydraulic oil to be supplied to the second direction switching valve 116. Examples of the operation device 117 are the work operation levers 412L, 412R. The remote control valve 117a is connected to the oil passage 114a. The remote control valve 117a is also connected to the pilot port 116a and the pilot port 116b of the second direction switching valve 116 via an oil passage 117b and an oil passage 117c, respectively. The remote control valve 117a supplies, as the pilot hydraulic oil, the hydraulic oil that is supplied from the pilot pump 114 via the oil passage 114a to the second direction switching valve 116. When the operation device 117 is operated, it is possible to switch the second direction switching valve 116, to switch the direction of the hydraulic oil to be supplied to the second actuator 112, and to adjust the flow rate of such hydraulic oil.

An on/off valve 180 is provided in the oil passage 114a between the pilot pump 114 and the remote control valve 117a. The on/off valve 180 is constructed of an electromagnetic valve and includes a solenoid 180a. The solenoid 180a is connected to the cut-off switch 416. As illustrated in FIG. 3, when the cut-off lever 415 is rotated downward and turns on the cut-off switch 416, the solenoid 180a is energized to bring the on/off valve 180 into a communication state. As a result, the hydraulic oil from the pilot pump 114 is supplied to the remote control valve 117a via the on/off valve 180. On the other hand, as illustrated by two-dot chain lines in FIG. 3, when the cut-off lever 415 is rotated upward, the cut-off switch 416 is turned off by an urging force of a spring, the solenoid 180a is no longer energized, and the on/off valve 180 is brought into a shutoff state by an urging force of a spring. In this way, the hydraulic oil from the pilot pump 114 is no longer supplied to the remote control valve 117a, and the pilot pressure is no longer applied to the second direction switching valve 116 even with the operation of the operation device 117. As a result, the hydraulic oil is not supplied to the second actuator 112, and an operation of the second actuator 112 is restricted. That is, when being rotated downward, the cut-off lever 415 is brought into a state of allowing the actuation of the work unit 3 with the operation of the operation device 117. When being rotated upward, the cut-off lever 415 is brought into a locked state where the work unit 3 is not actuated even with the operation of the operation device 117.

### [Configuration of Power Supply System]

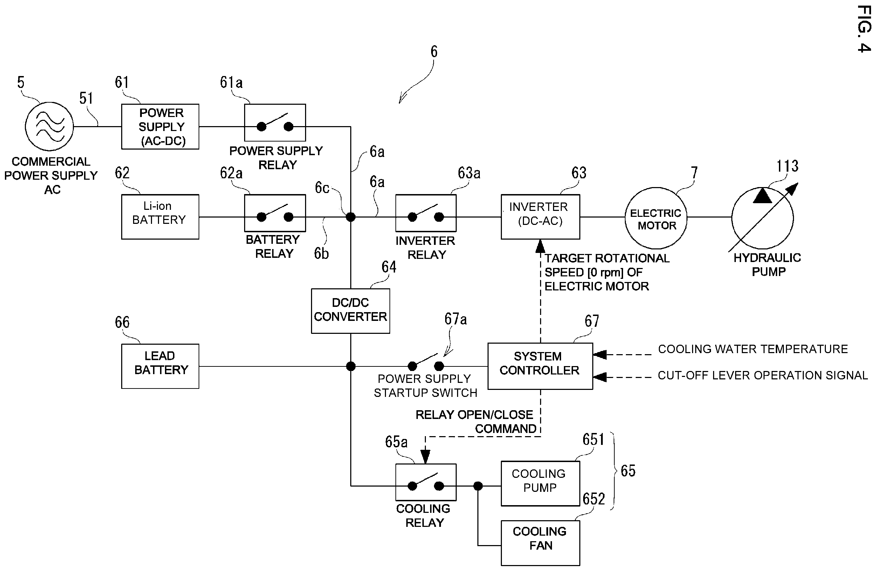

A description will be made on the power supply system 6 that is mounted on the excavator 1 and supplies the electric power to the electric motor 7 with reference to FIG. 4. The power supply system 6 includes: a power supply 61 that converts an alternating-current power supply voltage of the commercial power supply 5 into a direct-current power supply voltage; a battery 62 that charges or discharges the electric power from the power supply 61; an inverter 63 that converts the direct-current power supply voltage into the alternating-current power supply voltage; a first electrical circuit 6a that supplies the electric power from the power supply 61 to the inverter 63; a second electrical circuit 6b that joins the first electrical circuit 6a from the battery 62; an inverter relay 63a arranged between the inverter 63 and a junction point 6c between the first electrical circuit 6a and the second electrical circuit 6b; a battery relay 62a arranged between the junction point 6c and the battery 62; and a power supply relay 61a arranged between the junction point 6c and the power supply 61.

The power supply 61 converts an alternating-current voltage that is supplied from the commercial power supply 5 via the power supply cable 51 into a direct-current voltage. This direct-current voltage is supplied to the battery 62 via the power supply relay 61a and the battery relay 62a, and the battery 62 is thereby charged. The direct-current voltage of the power supply 61 is also supplied to the inverter 63 via the power supply relay 61a and the inverter relay 63a.

The battery 62 supplies the direct-current voltage to the inverter 63 via the battery relay 62a and the inverter relay 63a. An example of the battery 62 is a lithium-ion battery.

The inverter 63 converts the direct-current voltage, which is supplied from the power supply 61 and/or the battery 62, into the alternating-current voltage. This alternating-current voltage is supplied to an electric motor 7. The electric motor 7 actuates the hydraulic pump 113. Although only the hydraulic pump 113 is illustrated in FIG. 4, the plural hydraulic pumps may be provided.

The power supply system 6 includes a DC/DC converter 64 that converts the high direct-current voltage into the low direct-current voltage. The DC/DC converter 64 converts the direct-current voltage of 300 V into the direct-current voltage of 12 V, for example, and supplies the electric power to a cooling unit 65 and a system controller 67, which will be described below.

The power supply system 6 includes the cooling unit 65 for cooling electrical equipment. The electrical equipment includes the electric motor 7, the power supply 61, the battery 62, the inverter 63, and the like. A cooling water path, which is not illustrated, is formed around and in each of these types of the electrical equipment. A cooling pump 651 circulates cooling water through the cooling water path and thereby cools the electrical equipment. A radiator as a heat exchanger is provided on the cooling water path. When a cooling fan 652 blows cooling air to the radiator, the water in the radiator is cooled.

The cooling unit 65 (the cooling pump 651 and the cooling fan 652) is driven by the electric power that is supplied from the DC/DC converter 64 and a lead battery 66. A cooling relay 65a is arranged between the DC/DC converter 64 and the cooling unit 65.

The power supply system 6 includes the system controller 67 (corresponding to the controller of the present invention) for controlling the power supply system 6. The system controller 67 executes control of the electric power to be supplied to the electric motor 7, control of charging of the battery 62, and the like. More specifically, the system controller 67 controls the power supply 61, the inverter 63, the inverter relay 63a, the battery relay 62a, the power supply relay 61a, and the like so as to be able to drive the electric motor 7 and charge the battery 62. In addition, the system controller 67 can control the cooling unit 65 by opening/closing the cooling relay 65a.

In the case where the cut-off lever 415 is rotated upward and the system controller 67 receives a command of restricting an operation of the hydraulic actuator, the system controller 67 stops the electric motor 7, the cooling pump 651, and the cooling fan 652. The cut-off lever 415 is used to lock the hydraulic actuator when the operator leaves the excavator 1, or the like. Even in the case where the operator rotates the cut-off lever 415 upward, there is no problem of stopping the electric motor 7 for driving the hydraulic actuator (for driving the hydraulic pump 113). With locking operation of the cut-off lever 415, the operation of the hydraulic actuator is restricted, and the electric motor 7 is stopped so as to be able to prevent heat generation of the electrical equipment such as the battery 62, the electric motor 7, and the inverter 63. In addition, since the heat generation of the electrical equipment is prevented, it is possible to stop the cooling pump 651 and the cooling fan 652 for cooling the electrical equipment and thus to suppress electric power consumption of the battery 62.

Based on information on whether the cut-off lever 415 is rotated upward or downward that is sent from a cut-off switch 416, the system controller 67 can determine whether the cut-off lever 415 is rotated upward or downward. In the case where the cut-off lever 415 is rotated upward, the system controller 67 sends a command to the inverter 63 so as to bring a rotational speed of the electric motor 7 to zero, and sends a command to turn off the cooling relay 65a. On the other hand, in the case where the cut-off lever 415 is rotated downward, the system controller 67 sends a command to the inverter 63 so as to set the rotational speed of the electric motor 7 to a target value, and sends a command to turn on the cooling relay 65a.

A power supply startup switch 67a is arranged between the DC/DC converter 64 and the system controller 67. The power supply startup switch 67a is a key switch, for example. In addition, the lead battery 66 for the startup is connected to the system controller 67.

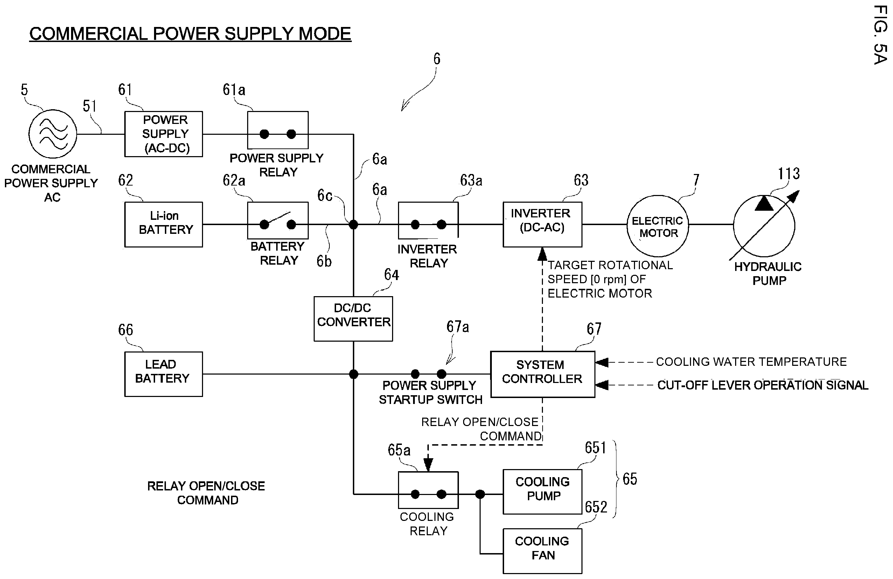

The power supply system 6 has plural power supply modes illustrated in FIG. 5A to FIG. 5D. As illustrated in FIG. 5A, the power supply system 6 can have a commercial power supply mode, in which the electric power is only supplied from the commercial power supply 5 to drive the electric motor 7, by contacting contacts of the inverter relay 63a and the power supply relay 61a and separating contacts of the battery relay 62a. In this way, a frequency of use of the battery 62 can be reduced, and life of the battery 62 can thereby be extended. In addition, even in the case where the battery 62 is brought into an abnormal state, the work can be continued by using the commercial power supply 5 in the commercial power supply mode.

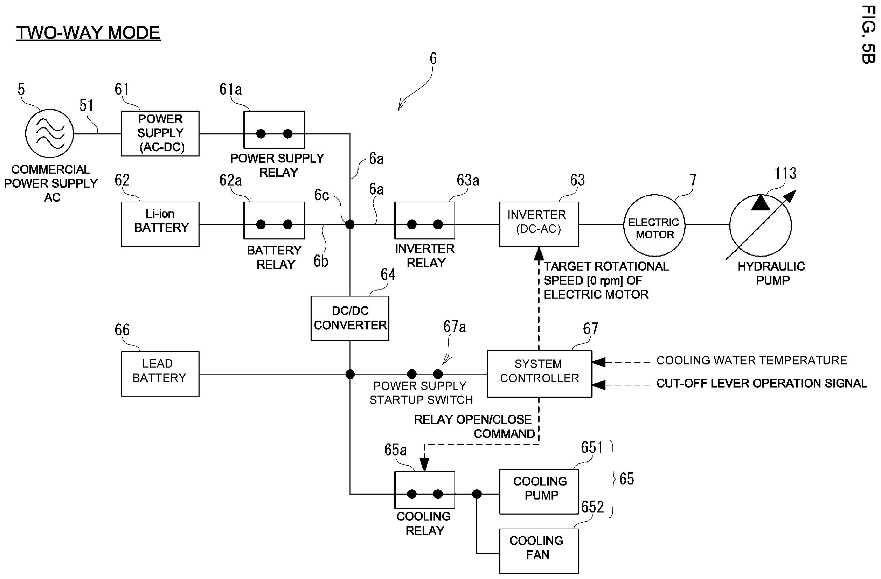

As illustrated in FIG. 5B, the power supply system 6 can have a two-way mode, in which the electric power is supplied from the battery 62 and the commercial power supply 5 to drive the electric motor 7, by contacting among the three contacts of the inverter relay 63a, the power supply relay 61a, and the battery relay 62a.

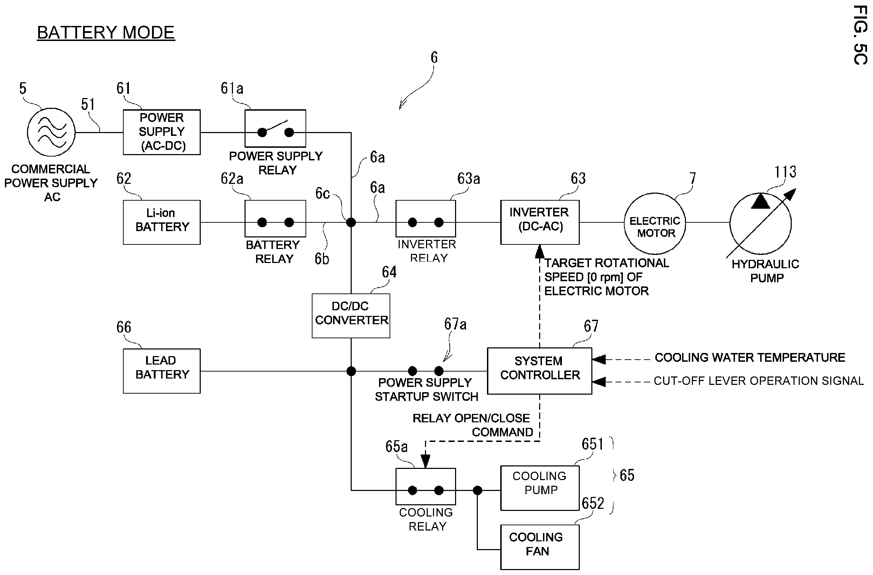

As illustrated in FIG. 5C, the power supply system 6 can have a battery mode, in which the electric power is only supplied from the battery 62 to drive the electric motor 7, by contacting the contacts of the inverter relay 63a and the battery relay 62a and separating the contact of the power supply relay 61a.

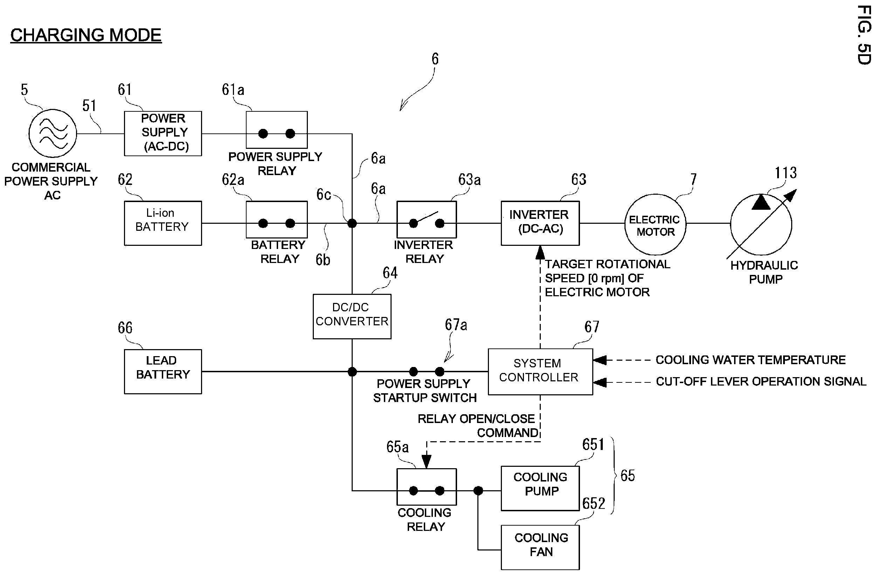

As illustrated in FIG. 5D, the power supply system 6 can have a charging mode, in which only the battery 62 is charged by the commercial power supply 5, by contacting the contacts of the battery relay 62a and the power supply relay 61a and separating the contact of the inverter relay 63a.

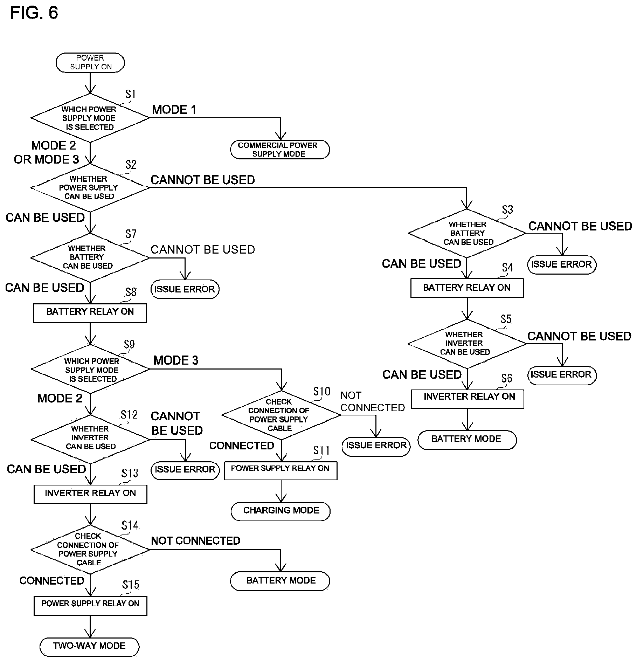

Next, a description will be made on a control method for switching the power supply mode described above. FIG. 6 is a flowchart illustrating a procedure of switching control of the power supply mode. First, the operator turns on the power supply. Next, the operator selects the power supply mode by using a power supply mode selection switch. In step S1, it is determined which power supply mode is selected. In the case where a mode 1 is selected, the system controller 67 turns on the inverter relay 63a and the power supply relay 61a and turns off the battery relay 62a so as to implement the commercial power supply mode.

Meanwhile, in the case where a mode 2 or a mode 3 is selected in step S1, in next step S2, it is determined whether the power supply 61 can be used. The power supply 61 includes a control section that determines whether the power supply 61 itself can be used and, if cannot be used, sends an error signal to the system controller 67. In the case where the system controller 67 receives the error signal from the power supply 61, the system controller 67 determines that the power supply 61 cannot be used.

If it is determined in step S2 that the power supply 61 "cannot be used", in next step S3, it is determined whether the battery 62 can be used. The battery 62 includes a control section that determines whether the battery 62 itself can be used and, if cannot be used, sends an error signal to the system controller 67. In the case where the system controller 67 receives the error signal from the battery 62, the system controller 67 determines that the battery 62 cannot be used. If it is determined in step S3 that the battery 62 "cannot be used", the system controller 67 issues an error.

On the other hand, if it is determined in step S3 that the battery 62 "can be used", in next step S4, the system controller 67 turns on the battery relay 62a. Next, in step S5, it is determined whether the inverter 63 can be used. The inverter 63 includes a control section that determines whether the inverter 63 itself can be used and, if cannot be used, sends an error signal to the system controller 67. In the case where the system controller 67 receives the error signal from the inverter 63, the system controller 67 determines that the inverter 63 cannot be used. If it is determined in step S5 that the inverter 63 "cannot be used", the system controller 67 issues an error.

On the other hand, if it is determined in step S5 that the inverter 63 "can be used", in next step S6, the system controller 67 turns on the inverter relay 63a. In this way, it is possible to implement the battery mode in which the electric power is supplied only from the battery 62 to drive the electric motor 7.

If it is determined in step S2 that the power supply 61 "can be used", in next step S7, it is determined whether the battery 62 can be used. If it is determined in step S7 that the battery 62 "cannot be used", the system controller 67 issues the error. On the other hand, if it is determined in step S7 that the battery 62 "can be used", in next step S8, the system controller 67 turns on the battery relay 62a.

Next, in step S9, it is determined which power supply mode is selected. If it is determined that the mode 3 is selected, in next step S10, connection of the power supply cable 51 is checked. When the power supply cable 51 is connected to the power supply port, the power supply 61 detects this and sends a connection signal to the system controller 67. In the case where the system controller 67 receives the connection signal from the power supply 61, the system controller 67 determines that the power supply cable 51 is connected to the power supply port. If it is determined in step S10 that the power supply cable 51 is "not connected", the system controller 67 issues an error.

On the other hand, if it is determined in step S10 that the power supply cable 51 is "connected", in next step S11, the power supply relay 61a is turned on. In this way, it is possible to implement the charging mode in which only the battery 62 is charged by the commercial power supply 5.

If it is determined in step S9 that the mode 2 is selected, in next step S12, it is determined whether the inverter 63 can be used. If the inverter 63 cannot be used, the system controller 67 issues the error. On the other hand, if it is determined in step S12 that the inverter 63 can be used, in next step S13, the system controller 67 turns on the inverter relay 63a.

Next, in step S14, the connection of the power supply cable 51 is checked. If it is determined in step S14 that the power supply cable 51 is "not connected", the battery mode, in which the electric power is supplied only from the battery 62 to drive the electric motor 7, is implemented.

On the other hand, if it is determined in step S14 that the power supply cable 51 is "connected", in next step S15, the power supply relay 61a is turned on. In this way, it is possible to implement the two-way mode in which the electric power is supplied from the battery 62 and the commercial power supply 5 to drive the electric motor 7.

In the case where the power supply system 6 is in a state of any power supply mode of the commercial power supply mode, the two-way mode, and the battery mode, where the cut-off lever 415 is rotated upward, and where the system controller 67 receives the command of restricting the operation of the hydraulic actuator, the system controller 67 sends the command to the inverter 63 so as to bring the rotational speed of the electric motor 7 to zero, and also sends the command to turn off the cooling relay 65a. In this way, the system controller 67 stops the electric motor 7, the cooling pump 651, and the cooling fan 652.

When stopping the electric motor 7, the system controller 67 keeps high-voltage side relays, that is, the power supply relay 61a, the battery relay 62a, and the inverter relay 63a on. In this way, the cut-off lever 415 is rotated downward. Thus, when the electric motor 7 is driven again, generation of a time lag can be prevented.

### [Another Embodiment]

The system controller 67 may stop the cooling pump 651 and the cooling fan 652 after the cut-off lever 415 is rotated upward, the system controller 67 receives the command to restrict the operation of the hydraulic actuator, and a cooling water temperature in the cooling water path becomes equal to or lower than a threshold value. The cooling water temperature is detected by a temperature sensor, which is not illustrated and provided in the cooling water path. The system controller 67uses the temperature sensor to collect the cooling water temperature in the cooling water channel, and compares the collected cooling water temperature with the threshold value so as to determine whether to stop the cooling pump 651 and cooling fan 652. In the case where a temperature of the electrical equipment remains high even after the electric motor 7 is stopped, the immediate stop of the cooling pump 651 and the cooling fan 652 possibly damages the electrical equipment. Thus, in the case where the cooling pump 651 and the cooling fan 652 are stopped after the cooling water temperature in the cooling water path becomes equal to or lower than the specified threshold value, the damage to the electrical equipment can be prevented.

The description has been made so far on the embodiments of the present invention with reference to the drawings. However, it should be considered that the specific configuration is not limited to that described in each of these embodiments. The scope of the present invention is indicated not only by the description of the above embodiments but also by the claims and further includes all modifications that fall within and are equivalent to the scope of the claims.

### DESCRIPTION OF REFERENCE NUMERALS

- 1: excavator
- 5: commercial power supply
- 51: power supply cable
- 6: power supply system
- 7: electric motor
- 62: battery
- 65: cooling unit
- 651: cooling pump
- 652: cooling fan
- 67: system controller
- 112: second actuator
- 113: hydraulic pump
- 415: cut-off lever

## Claims

1. An electric work machine comprising:
a battery;
an electric motor using the battery as a driving power source;
a hydraulic actuator having, as a hydraulic pressure source, a hydraulic pump that is driven by the electric motor;
a cut-off lever for restricting an operation of the hydraulic actuator by blocking a pilot pressure used to operate the hydraulic actuator;
an electric cooling pump that circulates cooling water through a cooling water path for cooling electrical equipment including the battery and the electric motor;
an electric cooling fan that blows cooling air to a radiator provided on the cooling water path; and
a controller that stops the electric motor, the cooling pump, and the cooling fan when the cut-off lever is rotated upward and the controller receives a command of restricting the operation of the hydraulic actuator.

2. The electric work machine according to claim 1, wherein
the controller stops the cooling pump and the cooling fan after the controller receives the command of restricting the operation of the hydraulic actuator and a cooling water temperature in the cooling water path becomes equal to or lower than a threshold value.
